# EUROPEAN PATENT SPECIFICATION

(11) **EP 0 776 081 B1**
(45) Date of publication and mention of the grant of the patent: **02.10.2002**
(21) Application number: 96118709.3
(22) Date of filing: 21.11.1996
(51) Int. Cl.: H02K 5/18, H02K 9/08, H02K 5/20

(54) **Totally-enclosed type motor**
Eingeschlossener Motortyp
Moteur du type hermétique

(30) Priority: 27.11.1995 JP 30712595
(43) Date of publication of application: 28.05.1997
(73) Proprietor: Hitachi, Ltd., Chiyoda-ku, Tokyo (JP)
(72) Inventor: Kajiwara, Kenzo, Hitachi-shi, Ibaraki 316 (JP); Nagai, Kouki, Hitachi-shi, Ibaraki 317 (JP); Takahashi, Kenji, Abiko-shi, Chiba 270-11 (JP); Kuwahara, Heikichi, Tsuchiura-shi, Ibaraki 300 (JP)
(74) Representative: Strehl Schübel-Hopf & Partner

(56) References cited:
- EP-A- 0 046 315
- EP-A- 0 072 999
- DE-A- 2 233 860
- DE-C- 407 785
- DE-U- 1 882 592

## Description

### Background of the Invention:

The present invention relates to a totally-enclosed type motor and in particularly to a totally-enclosed type motor having an interior portion cooling passage where the interior portion cooling air circulated by an interior portion fan passes through an inside ventilation passage of a stator frame and an exterior portion cooling passage where the exterior portion cooling air caused by an exterior portion fan passes through an outside ventilation passage of the stator frame.

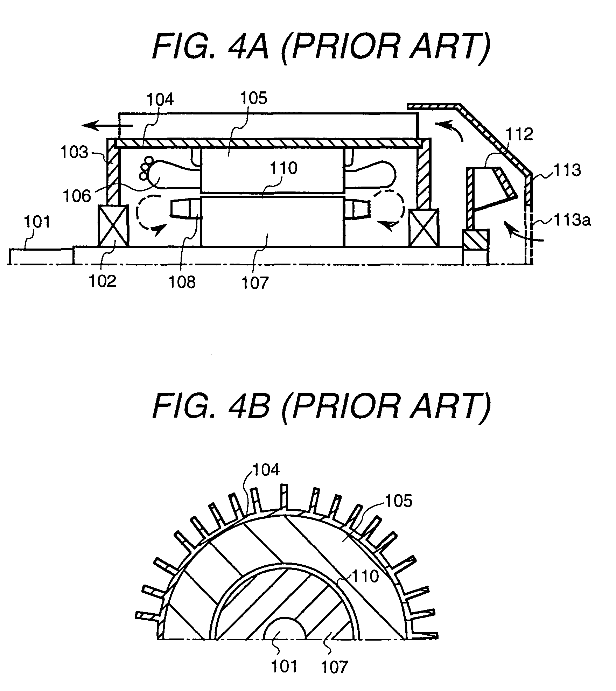

A general structure of a conventional totally-enclosed type motor is shown in Fig. 4A and Fig. 4B.

As shown in Fig. 4A and Fig. 4B, the conventional totally-enclosed type motor structure is roughly constituted by a rotor shaft 101, a rotor core 107 having a rotor winding 108, and a stator core 105 which is oppositely arranged against the rotor core 107 with an air gap 110 and has a stator winding 106.

The conventional totally-enclosed type motor structure is roughly constituted further by two bearing members 102 for rotatively supporting the rotor shaft 101, the two bracket members 103 for closing at an axial direction both ends of the stator frame 104, an exterior portion fan 112 which is arranged at an outer portion of the bracket member 103, and an end covering member 113 for covering the exterior portion fan 112.

With the above stated conventional totally-enclosed type motor construction, almost heat loss, which is generated in the stator core 105, the stator winding 106, the rotor core 107 and the rotor winding 108, is heat-transferred to the stator frame 104 through the stator core 105 under the heat conduction.

Further, according to the fan operation at an end portion of the rotor winding 108, as shown in a dotted line arrow mark in Fig. 4A, the interior portion cooling air is agitated and heat-transferred to an inner face of the stator frame 104 and an inner face of the bracket member 103 under the heat conduction. Therefore, a part of the heat loss is heat-transferred to the stator frame 104 under the heat conduction.

The heat loss being heat-transferred to the stator frame 104 is heat-radiated toward an outside of the motor and is cooled according to the exterior portion cooling air as shown with a solid line arrow mark in Fig. 4A by the exterior portion fan 112.

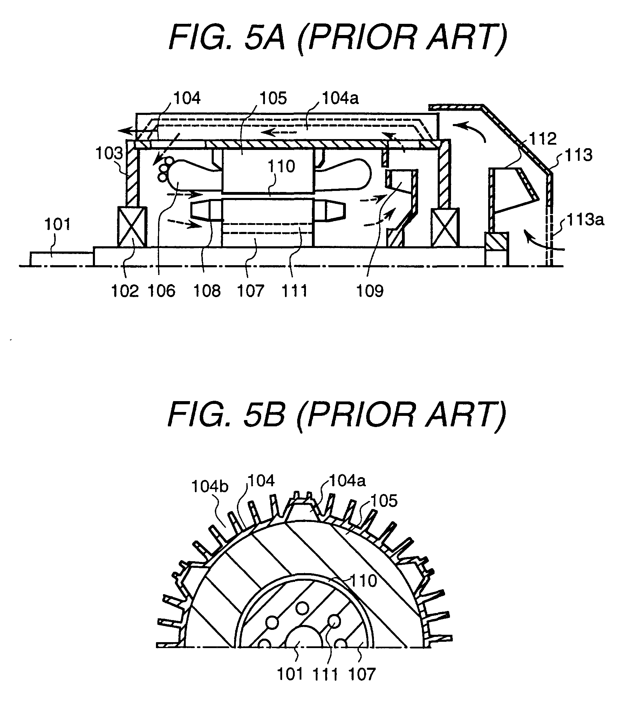

Another structure of a conventional totally-enclosed type motor is shown in Fig. 5A and Fig. 5B, such a totally-enclosed type motor is disclosed, for example, in Japanese utility model laid open No. 88,454/1987.

The above stated another conventional totally-enclosed type motor structure shown in Fig. 5A and Fig. 5B differs from the totally-enclosed type motor shown in Fig. 4A and Fig. 4B due to following points.

The stator frame 104 of this another conventional totally-enclosed type motor structure has plural inside ventilation passages 104a, plural outside ventilation passages 104b, and an interior portion fan 109.

The inside ventilation passage 104a is provided on at an inside portion of the stator frame 104 and is formed with a predetermined interval at the peripheral direction and is continuously formed at an axial direction.

The outside ventilation passage 104b are provided on at an outside portion of the stator frame 104 and continuously formed at the axial direction and are formed at the peripheral direction between the adjacent two inside ventilation passages 104a.

The interior portion fan 109 is arranged in the stator frame 104 and by rotating the rotor shaft 101 together with the interior portion cooling air which has cooled the stator core 105 and the rotor core 107 is sent out and is circulated to the inside ventilation passage 104a.

Two flows of the cooling airs in the above stated another conventional totally-enclosed type motor structure are shown using arrow marks as shown in Fig. 5A.

First of all, the interior portion cooling air, which has obtained the motive power by the interior portion fan 109, as shown with a dotted line arrow mark in Fig. 5A, passes through the inside ventilation passage 104a which is formed at the inner face of the stator frame 104.

After that the interior portion cooling air is distributed and passed through to the air gap 110 and axial ducts 111. The interior portion cooling air is returned again to the interior portion fan 109 and is circulated.

Further, the exterior portion cooling air, as shown with a solid line arrow mark in Fig. 5A, flows into from an end covering member air inlet port 113a which is provided on the end covering member 113 by the motive power of the exterior portion fan 112. The exterior portion cooling air passes through the outside ventilation passage 104b which is provided at an outside portion of the stator frame 104 and is discharged.

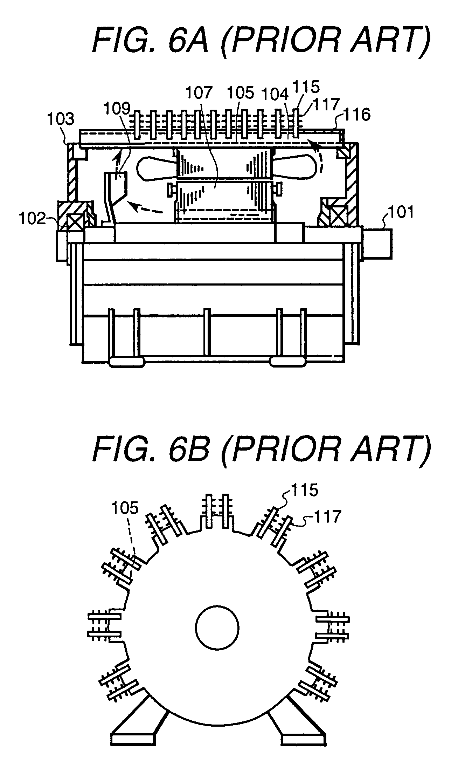

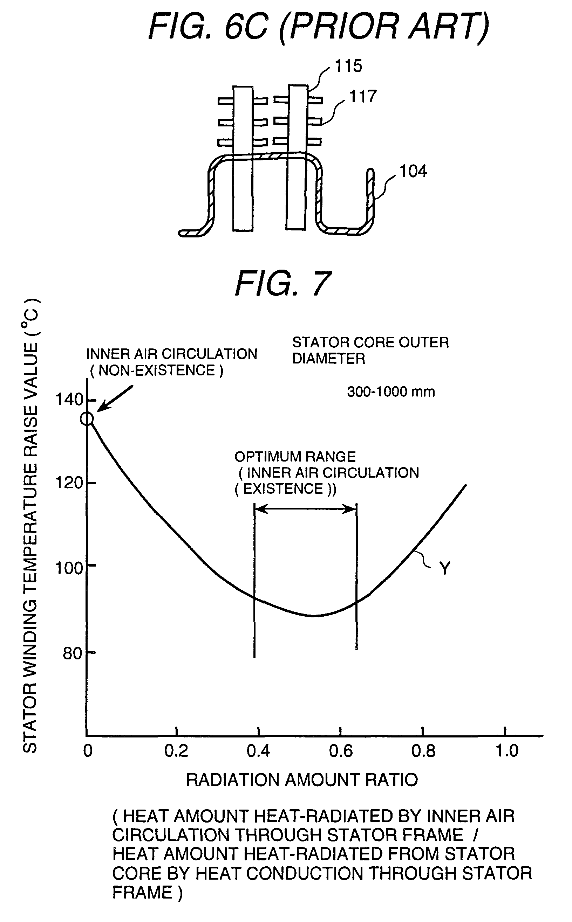

Furthermore, a further conventional totally-enclosed type motor structure is shown in, for example, Japanese utility model laid-open No. 113,562/1989. This further conventional totally-enclosed type motor structure is shown in Fig. 6A, Fig. 6B and Fig. 6C.

In the above stated conventional totally-enclosed type motor structure shown in Fig. 6A, Fig. 6B and Fig. 6C, the motor has no exterior portion fan in comparison with the above stated former two totally-enclosed type motor structures.

In place of the exterior portion fan, in the above stated totally-enclosed type motor structure shown in Fig. 6A, Fig. 6B and Fig. 6C, one end of a heat pipe 115 is projected toward into the interior portion of the inside ventilation passage 104a.

Plural heat radiation fins 117 are provided to the heat pipe 115 and are arranged in an opposite side of the inner projected heat pipe 115 towards the outside of the inside ventilation passage 104a of the heat pipe 115 or an outside of an outer frame 116.

With the above stated totally-enclosed type motor structure shown in Fig. 6A, Fig. 6B and Fig. 6C, an enlargement of the heat-receiving area is attained by the provision of the heat pipe 115 having plural heat radiation fins 117.

In the conventional totally-enclosed type motor structure shown in Fig. 4A and Fig. 4B, since the interior portion cooling air is merely agitated, the heat radiation amount is extremely small, as one example, the heat radiation amount by the agitation is about 12 % of the heat radiation total amount as one calculation example.

This conventional totally-enclosed type motor structure shown in Fig. 4A and Fig. 4B has a defect wherein the heat transfer amount brings about the limitation.

Further, in the conventional totally-enclosed type motor structure shown in Fig. 5A and Fig. 5B, the motor has two paths being heat-transferred to the stator frame 104, such two paths are the heat conduction (A) from the stator core 105 and the heat transfer (B) according to the interior portion cooling air.

The temperature raise in the motor is influenced by the total heat transfer amount of the amount of the above stated heat conduction (A) and the amount of the above stated heat transfer (B).

For example, the heat conduction (A) is made large by increasing the fitting-into area of the stator core 105 and the stator frame 104, however the heat transfer amount of the heat transfer (B) is made small.

On the other hand, the heat transfer (B) is made large by increasing the inside ventilation passage 104a, however the heat transfer amount of the heat conduction (A) is made small.

Accordingly, the conventional totally-enclosed type motor structure shown in Fig. 5A and Fig. 5B has a defect wherein the heat transfer amount in the motor brings about the limitation.

Further, in the conventional totally-enclosed type motor structure shown in Fig. 6A, Fig. 6B and Fig. 6C, the heat radiation fins 117 are mounted on the one side of the heat pipe 115 and are formed at the outside of the stator frame 104.

The pitch at the axial direction arrangement of the heat pipe 115 is at least more than an outer diameter of the heat radiation fin 117, therefore the increase of the heat-receiving area in the motor brings about the limitation.

Further, since at a side of the outside of the stator frame 104, the motor has not any cooling fan, the heat radiation is caused according to the natural heat radiation, therefore the heat transfer in the motor amount brings about the limitation.

Other examples of prior art motors are disclosed in documents EP-A-0 072 999 and DE-U-1 882 592.

### Summary of the Invention:

An object of the present invention is to provide a totally-enclosed type motor wherein a high cooling efficiency can be obtained without a reduction in the transfer amount according to a heat transfer from a stator core to a stator frame.

Another object of the present invention is to provide a totally-enclosed type motor wherein a high cooling efficiency can be obtained by increasing a heat transfer amount to a stator frame according to the interior portion cooling air.

According to the present invention, a totally-enclosed type motor as disclosed in claim 1 comprises a substantially cylindrical shape stator frame having plural internal ventilation passages which are arranged with a predetermined interval in a peripheral direction and are continuously formed in an axial direction and plural external ventilation passages which are formed between the internal ventilation passages in the peripheral direction, a stator core fitted into the stator frame and having a stator winding, a rotor core oppositely arranged in the stator core with a predetermined interval and fitted onto a rotor shaft and having a rotor winding, bearing members for rotatively supporting the rotor shaft, bracket members for closing both ends in the axial direction of the stator frame in a state where the stator core and the rotor core are received in the stator frame, an internal fan arranged within the closed stator frame for rotating with the rotor shaft to circulate cooling air, which has cooled the stator core and the rotor core through the internal ventilation passages, and an external fan arranged outside the stator frame for circulating cooling air through the external ventilation passage by rotating together with the rotor shaft.

At least one heat radiation rib is continuously provided at the axial direction in an inner face of the inside ventilation passage of the stator frame.

Plural heat radiation ribs are continuously provided at the axial direction by forming with a rolling shape on an inner face of the inside ventilation passage of the stator frame.

A number of the heat radiation ribs provided on the inside ventilation passage of the stator frame is set with a range of 5-12 and at least one heat radiation rib is continuously provided at the axial direction in an inner face of each of the inside ventilation passage of the stator frame.

A ratio between heat radiation rib provided on the inside ventilation passage of the stator frame and fitting-into area between the stator frame and the stator core is set with a range of 1.5-5.

A ratio between a heat amount being heat-radiated cooling air circulated by the interior portion fan through the stator frame by passing through the inside ventilation passage of the stator frame and a heat amount being heat-radiated from the rotor core according to the heat conduction through the stator frame is set with a range of 0.4-0.65.

With the totally-enclosed type motor structure stated in above according to the present invention, since at least one heat radiation rib is continuously provided at the axial direction in the inner face of the inside ventilation passage of the stator frame, the increase in the cooling area in the motor can be attained.

Further, since the totally-enclosed type motor structure according to the present invention, the motor has the exterior portion fan, the heat being heat-transferred to the stator frame is heat-transferred to the exterior portion cooling air, therefore the cooling effect in the motor can be heightened.

Further, since the inner air ventilation and circulation passage system is formed, the heat transfer amount to the stator frame is increased according to the heat transfer by the interior portion cooling air, therefore the cooling efficiency in the motor can be heightened.

Accordingly, since without the reduction in the heat transfer amount according to the heat conduction from the stator core to the stator frame, the heat transferring area in the inner face of the stator frame increases and the heat resistance in the motor reduces.

Therefore the temperature raise in the totally-enclosed type motor can be reduced and the improvement in the cooling efficiency in the motor can be attained.

Further, in case that the number of the inside ventilation passage in the stator frame is too many, the fitting-into area between the stator frame and the stator core reduces. Since the contact portion heat resistance of the fitting-into area increases, the temperature raise in the motor can be heightened.

Accordingly, the motor has the range for optimizing the number of the inside ventilation passage. As a result of the ventilation and the heat transfer analysis, such an optimum range number of the inside ventilation passage is set with a range of 5-12.

Further, the ratio between the amount being heat-radiated from the stator core passing through the stator frame and the amount being heat-transferred once to the inside air and being heat-radiated has an optimum range.

The stator winding temperature varies due to the ratio of the heat radiation amount. In case that the ratio of the heat radiation amount is a range of 0.4-0.65, the stator winding temperature lowers, therefore the high cooling performance in the motor can be obtained.

Further, the heat-radiating area of the heat radiation rib provided in the inner face in the inside ventilation passage has an optimum range, the optimum range is the ratio of the fitting-into area between the stator frame and the stator core of a range of 1.5-5, therefore the high cooling performance in the motor can be obtained.

### Brief Description of Drawings:

Fig. 1A is a front longitudinal cross-sectional view showing one embodiment of a totally-enclosed type motor according to the present invention;
Fig. 1B is a side longitudinal cross-sectional view showing one embodiment of a totally-enclosed type motor according to the present invention;
Fig. 2 is a partially view of a side longitudinal cross-section showing another embodiment of a totally-enclosed type motor according to the present invention;
Fig. 3 is a heat conduction characteristic in one embodiment of a totally-enclosed type motor according to the present invention and is a characteristic view showing heat resistance of an inside ventilation passage and the contact portion heat resistance between a stator frame and a stator core with respect to a number of the inside ventilation passage;
Fig. 4A is a front longitudinal cross-sectional view showing one example of a totally-enclosed type motor according to a prior art;
Fig. 4B is a side longitudinal cross-sectional view of Fig. 4A;
Fig. 5A is a front longitudinal cross-sectional view showing another example of a totally-enclosed type motor according to a prior art;
Fig. 5B is a side longitudinal cross-sectional view of Fig. 5A;
Fig. 6A is a front longitudinal cross-sectional view showing a further example of a totally-enclosed type motor according to a prior art;
Fig. 6B is a side view of Fig. 6(a);
Fig. 6C is a partially enlarged view of Fig. 6B;
Fig. 7 is a characteristic view showing stator winding temperature raise according to a ratio of heat radiation amount in one embodiment of a totally-enclosed type motor according to the present invention; and
Fig. 8 is a characteristic view showing stator winding temperature raise according to an area ratio in one embodiment of a totally-enclosed type motor according to the present invention.

### Description of the Invention:

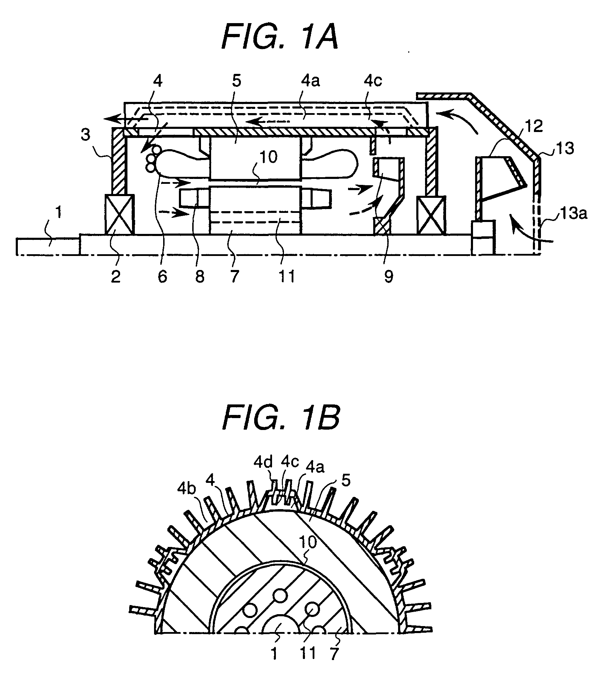

Hereinafter, one embodiment of a totally-enclosed type motor according to the present invention will be explained referring the drawings. Fig. 1A and Fig. 1B show one embodiment of a totally-enclosed type motor according to the present invention.

As shown in Fig. 1A and Fig. 1B, one embodiment of the totally-enclosed type motor structure according to the present invention is constituted by a rotor shaft 1, a rotor core 7 fitted into the rotor shaft 1 and having a rotor winding 8, and a stator core 5 which is oppositely arranged against the rotor core 7 with a predetermined gap or an air gap 10 and has a stator winding 6, an outer periphery face of the stator core 5 is fitted into an inner face of a substantially cylindrical shape stator frame 4.

One embodiment of the totally-enclosed type motor structure according to the present invention is constituted further by two bearing members 2 for rotatively supporting the rotor shaft 1, two bracket members 3 for closing at an axial direction both ends of the stator frame 4 under a state where the stator core 5 and the rotor core 7 are received in the stator frame 4, and an interior portion fan 9 which is arranged at inner portion of the bracket member 3.

One embodiment of the totally-enclosed type motor structure according to the present invention is constituted further an exterior portion fan 12 which is arranged at an outer portion of the bracket member 3 and by rotating the rotor shaft 1 together with the exterior portion cooling air is sent out to an outside ventilation passage 4b which is formed on an outer periphery of the stator frame 4, and an end covering member 13 for covering the exterior portion fan 12 and for guiding the exterior portion cooling air in the exterior portion fan 12 toward the outside ventilation passage 4b.

In this embodiment of the totally-enclosed type motor according to the present invention, the stator frame 4 has plural inside ventilation passages 4a, plural outside ventilation passages 4b, plural inner heat radiation ribs 4c, and plural outer heat radiation ribs 4d.

The inside ventilation passage 4a is provided on at an inside portion of the stator frame 4 and is formed with a predetermined interval at the peripheral direction and is continuously formed at an axial direction.

The outside ventilation passage 4b is provided on at an outside portion of the stator frame 4 and continuously formed at the axial direction and is formed at the peripheral direction between the adjacent two inside ventilation passages 4a.

The outside ventilation passage 4b is formed between two adjacent straight shape long ribs which extend towards the radial direction from the stator frame 4.

The interior portion fan 9 is arranged in the stator frame 4 and by rotating the rotor shaft 1 together with the interior portion cooling air which has cooled the stator core 5 and the rotor core 7 is sent out and is circulated to the inside ventilation passage 4a.

The two outer heat radiation ribs 4d are integrally formed at the outer face on the inside ventilation passage 4a. This outer heat radiation rib 4d extends to have the same tip portion of a tip end portion of the radial direction of the straight shape long rib which forms one element for comprising the outside ventilation passage 4b.

In other words, a tip end of the outer heat radiation rib 4d is positioned at a tip end portion of the straight shape long rib.

The two inner heat radiation rib 4c are integrally and continuously provided at the axial direction in the inner face of the inside ventilation passage 4a and are oppositely arranged with the outer heat radiation ribs 4d which are integrally provided on the outer face of the inside ventilation passage 4a.

As shown in Fig. 1A and Fig. 1B, in this embodiment of the totally-enclosed type motor according to the present invention, six inside ventilation passages 4a and two heat radiation ribs 4c are provided on each inside ventilation passage 4a.

The six inside ventilation passages 4a are formed in the outside portion of the stator frame 4 and in a dent shape at a radial direction and at the outside portion of the stator frame 4. The six inside ventilation passages 4a are formed to have a predetermined interval at a peripheral direction. The two inner heat radiation ribs 4c are continuously formed toward the axial direction in the inside ventilation passage 4a.

Two flows of the cooling airs in the above stated totally-enclosed type motor structure will be explained. First of all, the flow of the interior portion cooling air is shown as a dotted line arrow mark in Fig. 1A.

After the interior portion cooling air obtained the motive power by the interior portion fan 9 passes through the inside ventilation passage 4a which is provided on the inside portion of the stator frame 4. The interior portion cooling air is distributed and ventilated to the air gap 10 and the axial ducts 11, and this interior portion cooling air is returned again to the interior portion fan 9.

Further, the exterior portion cooling air is shown as a solid line arrow mark in Fig. 1A. By the motive power of the exterior portion fan 12, the exterior portion cooling air inflows from the end covering member air inlet port 13a which is provided on the end covering member 13. The exterior portion cooling air is discharged by passing through the outside ventilation passage 4b which is provided on the outside portion of the stator frame 4.

Next, the flow of the heat will be explained. The heat loss (hereinafter, it is called as "motor interior generation heat loss") generates in the stator core 5, the stator winding 6, the rotor core 7 and the rotor winding 8.

The motor interior generation heat loss comprises one heat loss, which is heat-transferred to the stator frame 4 through the stator core 5 according to the heat conduction, and another heat loss, which is heat-transferred through the interior portion cooling air by the interior portion fan 9 according to the heat transfer.

The motor interior generation heat loss being heat-transferred to the stator frame 4 is heat-radiated and discharged to the outside of the motor by the exterior portion cooling air according to the exterior portion fan 12.

Herein, as shown in this embodiment of the totally-enclosed type motor according to the present invention, since the inner heat radiating rib 4c is continuously provided at the axial direction in the inside ventilating passage 4a of the stator frame 4, the heat-transferring area increases. As a result, the motor interior generation heat loss being heat-transferred to the interior portion cooling air is effectively heat-transferred to the stator frame 4.

Further, since the motor has the exterior portion fan 12, the heat being heat-transferred to the stator frame 4 is heat-transferred to the exterior portion cooling air, therefore the cooling efficiency in the motor can be heightened.

Further, since the six inner air ventilation circulation passage systems are formed, the heat conduction amount to the stator frame 4 is increased according to the heat transfer by the interior portion cooling air, therefore the cooling efficiency in the motor can be heightened.

Accordingly, without the reduction in the contact portion area between the stator core 5 and the stator frame 4, in other words without the increase in the heat resistance from the stator core 5 to the stator frame 4 according to the heat conduction, the heat resistance being heat-transferred to the stator frame 4 according to the heat transfer by the interior portion cooling air can be reduced. As a result, the temperature raise in the motor can be reduced.

According to the actual measurement results by the inventors of the present invention, comparing with the temperature raise in the stator winding 106 according to the prior art shown in Fig. 4A and Fig. 4B was 135 °C, the temperature raise in the stator winding 6 according to this embodiment of the present invention where the six inner air ventilation circulation passage systems including the inner heat radiation ribs 4c are provided was 88 °C and the temperature raise of the embodiment according to the present invention is reduced by 35 % comparing with the above stated prior art motor structure.

Further, comparing with the temperature raise in the stator winding 106 according to the prior art shown Fig. 5A and Fig. 5B was 102 °C, the temperature raise in the stator winding 6 according to this embodiment of the present invention where the six inner air ventilation circulation passage systems are provided was 88 °C and the temperature raise of the embodiment according to the present invention is reduced by 14 % comparing with the above stated prior art motor structure.

Further, the temperature raise in the stator winding 106 according to the prior art shown in Fig. 6A, Fig. 6B and Fig. 6C is assumed at 180 °C, so that it is understood that the effects obtained by this embodiment according to the present invention is larger than those of this prior art.

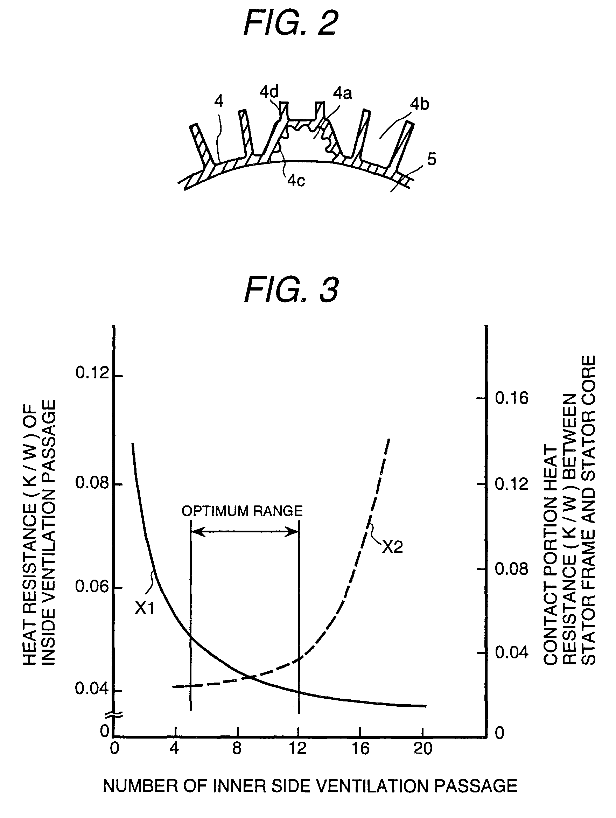

Another embodiment of a totally-enclosed type motor according to the present invention will be explained referring to Fig. 2.

In this embodiment according to the present invention shown in Fig. 2, the inside ventilation passage 4a of the stator frame 4 is formed in a wave shape or a rolling shape on in the inner face of the inside ventilation passage 4a. Therefore, plural inner heat radiation ribs 4c are integrally and continuously formed at the axial direction by comprising of inner projecting portions or inner protruding portions of the rolling shape member.

Further, the fatigue of the inner heat radiation rib 4c in the inside ventilation passage 4a of the stator frame 4 can twist at the axial direction, or the surface of the inner heat radiation rib 4c can form with an unevenness shape, and further the number of the inner heat radiation rib 4c can increase. With the above stated various totally-enclosed type motor structures, similar effects stated in the above two embodiments according to the present invention can be obtained.

Fig. 3 is one calculation example showing the contact portion heat resistance of the stator frame 4 and the stator core 5 and the passage heat resistance at the inside ventilation passage 4a with respect to the number of the inside ventilation passages 4a of the stator frame 4 in the totally-enclosed type motor which has the outer diameter of the stator core 5 of 300 mm - 1000 mm.

In Fig. 3, the heat resistance (K/W) of the inside ventilation passage 4a is shown in the left side of the vertical axis and the contact portion heat resistance (K/W) in the right side of the vertical axis, and further the number of the inside ventilation passage 4a is shown in the horizontal axis.

The heat resistance (K/W) of the inside ventilation passage 4a is indicated by a solid line curve X1 and the contact portion heat resistance (K/W) between the stator frame 4 and the stator core 5 is indicated by a dotted line curve X2.

The totally-enclosed type motor has two paths being heat-transferred to the stator frame 4, one of which is the heat conduction (A) from the stator core 5 and other of which is the heat transfer according to the interior cooling air.

In case the number of inside ventilation passages 4a is too small the amount of heat transferred to the inner surface of the stator frame 4 by the interior portion cooling air becomes small. In other words, the ventilation passage heat resistance shown by the solid line X1 in Fig. 3, and thus the temperature raise in the motor increases.

In case the number of inside ventilation passages 4a is too large the fitting-into area between the stator frame 4 and the stator core 5 decreases, so that the contact portion heat resistance shown by the broken line X2 in Fig. 3, and thus the temperature raise in the motor increase.

As a result, to satisfy the above stated both lower heat resistance conditions, the motor has the range for optimizing the number of the inside ventilation passage 4a. Fig. 3 shows the results of the analysis about the ventilation and the heat transfer.

As clearly shown in this Fig. 3, the number of the inside ventilation passages 4a for satisfying the above both lower heat resistance conditions is set with a range of 5-12, as a whole the temperature raise in the motor can reduced.

In other words, by increasing the cooling efficiency the temperature raise in the motor reduces, therefore the reliability of the motor can be heightened. In commonly, the temperature raise has a normal value as the standard, so that in case of the design for making the temperature raise same, the motor size can be reduced.

Next, in the inner air ventilation circulation passage system, the inventors of the present invention considered that the motor has the optimum range about the ratio between the amount to be heat-radiated from the stator core 5 through the stator frame 4 and the amount to be heat-transferred once to the inside air and to be heat-radiated.

Further, the inventors of the present invention searched the temperature raise in the stator winding 6 by varying the ratio of the heat radiation amount. The results are shown in Fig. 7.

As shown in this Fig. 7, the temperature raise in the stator winding 6 varies due to the ratio of the heat radiation amount, the temperature raise in the stator winding 6 lowers at the ratio of the heat radiation amount of 0.4-0.65 and at this range the high cooling performance in the motor can be displayed.

In the totally-enclosed type motor having the outer diameter of the stator core of 300 mm - 1000 mm, to establish the ratio of the heat radiation amount more than 0.65, it is necessary to provide many flow passages in the stator frame 4.

Therefore, the range of the contact portion area of the fitting-into portion becomes small, it will heighten the temperature raise in the stator winding 6.

As clearly shown in a solid line curve Y in Fig. 7, the inventors of the present invention found that by increasing the contact portion area between the stator core 5 and the stator frame 4 and also increasing the heat amount to be heat-radiated from the inside air, it is necessary to heighten the ratio of the amount being heat-radiated from the inside air more than half the amount to be heat-radiated from the stator core 5 through the stator frame 4.

Accordingly, the totally-enclosed type motor does not provide many cooling air passages in the stator frame 4 but it is necessary to lower the heat resistance of the cooling air flow passage in the stator frame 4.

As the countermeasures of the above stated facts, the inner heat radiation ribs 4c are integrally mounted on the inside of the cooling air flow passage in the stator frame 4, and the heat resistance of the cooling air flow passage in the stator frame 4 lowers.

In the case of the inner air ventilation circulation passage system according to the prior art, the heat radiation rib is not mounted on the inside of the cooling air flow passage in the stator frame.

As a result, in the prior art the ratio of the heat radiation amount is set with a range of 0.2-0.3, the cooling efficiency in the motor does not increase very much comparing with no inner air ventilation circulation passage system.

Further, in the totally-enclosed type motor having the outer diameter of the stator core 5 of 300 mm-1000 mm, the heat radiation area of the inner heat radiation rib 4c provided on the inner face of the inside ventilation passage 4a has the optimum range.

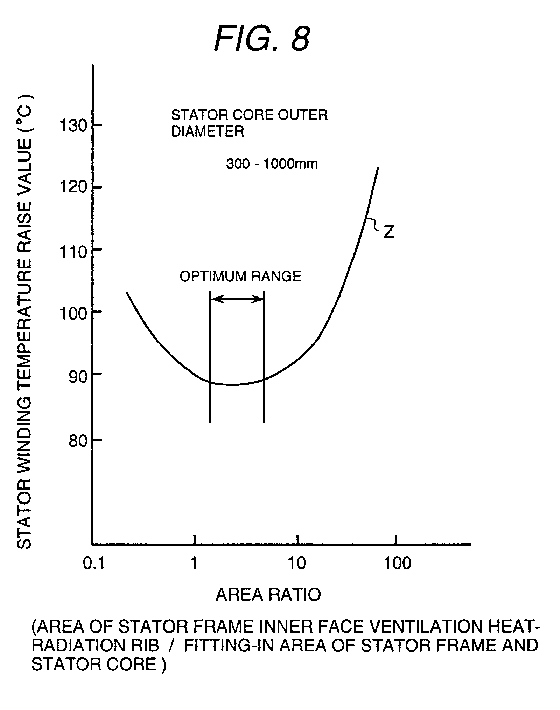

As shown in a solid line curve Z in Fig. 8, the ratio between the heat radiation area of the inner heat radiation rib 4c provided in the inside ventilation passage 4a and the fitting-into area between the stator core 5 and the stator frame 4 has the optimum range of 1.5-5.

In other words, it is necessary to make larger the area of the inner heat radiation rib 4c in the inside ventilation passage 4a than the fitting-into area between the stator core 5 and the stator frame 4.

In this case, both the amount being heat- radiated through the inside air and the amount being heat-radiated from the stator core 5 through the stator frame 4 have the optimum ranges.

Since the inner heat radiation rib is integrally and continuously provided at the axial direction in the inner face of the inside ventilation passage of the stator frame, the increase in the cooling area can be attained.

Further, since the motor has the exterior portion fan, since the heat being heat transferred to the stator frame is made to heat-transfer to the exterior portion cooling air, the cooling effect in the motor can be heightened.

Further, since the inner air ventilation circulation passage system is formed, the heat transfer amount to the stator frame by the interior portion cooling air according to the heat transfer is increased, the cooling efficiency in the motor can be heightened.

Further, in case that the number of the inside ventilation passages of the stator frame is too high, the fitting-into area between the stator frame and the stator core reduces. Since the contact heat resistance of the fitting-into area increases, the temperature raise in the motor is heightened.

Accordingly, the motor has the range for optimizing the number of the inside ventilation passage. As a result of the ventilation and the heat transfer analysis, such an optimum range number is of the inside ventilation passage is set with a range of 5-12.

Further, the ratio between the amount being heat-radiated from the stator core passing through the stator frame and the amount being heat-transferred once to the inside air and heat-radiated has an optimum range.

The stator winding temperature varies due to the ratio of the heat radiation amount. In case that the ratio of the heat radiation amount is set with a range of 0.4-0.65, the stator winding temperature lowers, therefore the high cooling performance in the motor can be obtained.

Further, the heat-radiating area of the heat radiation rib provided on the inner face in the inside ventilation passage has an optimum range, the optimum range is the ratio of the fitting-into area between the stator frame and the stator core of 1.5-5, therefore the high cooling performance in the motor can be obtained.

## Claims

1. A totally-enclosed type motor comprising
a substantially cylindrical stator frame (4) having a plurality of axially extending internal ventilation passages (4a) and external ventilation passages (4b),
a stator core (5) having a substantially smooth and continuous outer circumferential surface, said stator core (5) being fitted in the stator frame (4) and having a stator winding (6),
a rotor core (7) arranged opposite said stator core (5), mounted on a rotor shaft (1) and having a rotor winding (8),
bracket members (3) closing both axial ends of said stator frame (4) to enclose said stator core (5) and rotor core (7) within said frame (4),
an internal fan (9) mounted for rotation with said rotor shaft (1) and being disposed within said closed stator frame (4) for circulating cooling air, which has cooled said stator and rotor cores (5, 7), through said internal ventilation passages (4a), and
an external fan (12) mounted for rotation with said rotor shaft (1) and being disposed outside of said stator frame (4) for circulating cooling air through said external ventilation passages (4b),
**characterised in that**
at least one axially extending inner heat radiation rib (4c) is continuously provided on the inner surface of each said internal ventilation passage (4a), and
the ratio of the heat radiating surface area of said at least one inner heat radiation rib (4c) to the fitting-in area between said stator frame (4) and stator core (5) is in the range of 1.5 to 5, the fitting-in area being defined as the area of contact between stator core and frame, i.e. the area of the circumferential inner surface of the frame except the circumferential portions of the internal ventilation passages (4a).

2. The motor of claim 1, wherein said inner heat radiation ribs (4c) have a substantially rectangular cross-section.

3. The motor of claim 1, wherein said inner heat radiation ribs (4c) are distributed across the inner surface of each said ventilation passage (4a) and extend radially so as to provide a rolling or undulated shape to the inner surface.

4. The motor of any preceding claim, wherein each said internal ventilation passage (4a) is formed by a radially outwardly dented portion of said stator frame (4) and has at least one outer heat radiation rib (4d) provided on its outer surface opposite said inner radiation rib (4c).

5. The motor of any preceding claim, wherein the number of internal ventilation passages (4a) is in the range of 5 to 12.

## Patentansprüche

1. Gekapselter Motor mit
einem im wesentlichen zylindrischen Ständerrahmen (4) mit mehreren axial verlaufenden internen Lüftungskanälen (4a) und externen Lüftungskanälen (4b),
einem Ständerkern (5) mit einer im wesentlichen glatten kontinuierlichen äußeren Umfangsfläche, der in den Ständerrahmen (4) eingesetzt ist und eine Ständerwicklung (6) aufweist,
einem dem Ständerkern (5) gegenüber angeordneten Läuferkern (7), der auf einer Läuferwelle (1) montiert ist und eine Läuferwicklung (8) aufweist,
die beiden axialen Enden des Ständerrahmens (4) abschließenden Stützteilen (3) zum Umschließen des Ständerkerns (3) und des Rotorkerns (7) innerhalb des Rahmens (4),
einem inneren Lüfter (9), der mit der Läuferwelle (1) drehbar montiert und innerhalb des geschlossenen Ständerrahmens (4) angeordnet ist, um Kühlluft nach Kühlung der Ständer- und Läuferkerne (5, 7) durch die inneren Lüftungskanäle (4a) zirkulieren zu lassen, und
einem äußeren Lüfter (12), der mit der Läuferwelle (1) drehbar montiert und außerhalb des Ständerrahmens (4) angeordnet ist, um Kühlluft durch die äußeren Kühlkanäle (4b) zirkulieren zu lassen,
**dadurch gekennzeichnet,**
**daß** an der Innenfläche jedes der inneren Lüftungskanäle (4a) durchgehend mindestens eine axial verlaufende innere Wärmeabstrahlrippe (4c) vorgesehen ist, und
**daß** das Verhältnis der Wärmeabstrahlfläche der mindestens einen inneren Wärmeabstrahlrippe (4c) zu der Einbaufläche zwischen Ständerrahmen (4) und Ständerkern (5) im Bereich von 1,5 bis 5 liegt, wobei die Einbaufläche als Kontaktfläche zwischen Ständerkern und Ständerrahmen definiert ist, d.h. als Bereich der inneren Umfangsfläche des Rahmens mit Ausnahme der Umfangsteile der inneren Lüftungskanäle (4a).

2. Motor nach Anspruch 1, wobei die inneren Wärmeabstrahlrippen (4c) im wesentlichen rechteckigen Querschnitt haben.

3. Motor nach Anspruch 1, wobei die inneren Wärmeabstrahlrippen (4c) über die Innenfläche jedes der Lüftungskanäle (4a) verteilt sind und in Radialrichtung so verlaufen, daß sie der Innenfläche eine rollende oder wellige Form verleihen.

4. Motor nach einem der vorhergehenden Ansprüche, wobei jeder der inneren Lüftungskanäle (4a) durch einen radial nach innen vertieften Teil des Ständerrahmens (4) gebildet ist und auf seiner Außenfläche gegenüber der inneren Abstrahlrippe (4c) mindestens eine äußere Wärmeabstrahlrippe (4d) aufweist.

5. Motor nach einem der vorhergehenden Ansprüche, wobei die Anzahl von inneren Lüftungskanälen (4a) im Bereich von 5 bis 12 liegt.

## Revendications

1. Moteur du type hermétique comportant :
une carcasse de stator sensiblement cylindrique (4) ayant une pluralité de passages de ventilation intérieurs s'étendant axialement (4a) et de passages de ventilation extérieurs (4b),
un noyau de stator (5) ayant une surface circonférentielle extérieure sensiblement lisse et continue, ledit noyau de stator (5) étant monté dans la carcasse de stator (4) et ayant un enroulement de stator (6),
un noyau de rotor (7) disposé en regard dudit noyau de stator (5), monté sur un arbre de rotor (1) et ayant un enroulement de rotor (8),
des éléments formant étriers (3) fermant les deux extrémités axiales de ladite carcasse de stator (4) pour enfermer ledit noyau de stator (5) et le noyau de rotor (7) dans ladite carcasse (4),
un ventilateur intérieur (9) monté pour tourner avec ledit arbre de rotor (1) et étant disposé dans ladite carcasse de stator fermée (4) pour faire circuler de l'air de refroidissement, qui a refroidi les noyaux de stator et de rotor (5, 7), à travers lesdits passages de ventilation intérieurs (4a), et
un ventilateur extérieur (12) monté pour tourner avec ledit arbre de rotor (1) et disposé à l'extérieur de ladite carcasse de stator (4) pour mettre en circulation de l'air de refroidissement à travers lesdits passages de ventilation extérieurs (4b),
**caractérisé en ce que**
au moins une nervure intérieure de rayonnement de chaleur s'étendant axialement (4c) est réalisée en continu sur la surface intérieure de chacun desdits passages de ventilation intérieurs (4a), et
le rapport de l'aire de surface rayonnant de la chaleur de ladite au moins une nervure intérieure de rayonnement de chaleur (4c) sur l'aire d'emboîtement entre ladite carcasse de stator (4) et le noyau de stator (5) est dans la plage de 1,5 à 5, l'aire d'emboîtement étant définie comme l'air de contact entre le noyau de stator et la carcasse de stator, c'est-à-dire l'aire de la surface circonférentielle intérieure de la carcasse à l'exception des parties circonférentielles des passages de ventilation intérieurs (4a).

2. Moteur selon la revendication 1, dans lequel lesdites nervures intérieures de rayonnement de chaleur (4c) ont une section transversale sensiblement rectangulaire.

3. Moteur selon la revendication 1, dans lequel lesdites nervures intérieures de rayonnement de chaleur (4c) sont réparties sur la surface intérieure de chacun desdits passages de ventilation (4a) et s'étendent radialement de manière à donner une forme roulante ou ondulée à la surface intérieure.

4. Moteur selon l'une quelconque des revendications précédentes, dans lequel chaque dit passage de ventilation intérieur (4a) est formé par une partie dentée radialement vers l'extérieur de ladite carcasse de stator (4) et a au moins une nervure extérieure de rayonnement de chaleur (4d) réalisée sur sa surface extérieure, en regard de ladite nervure intérieure de rayonnement (4c).

5. Moteur selon l'une quelconque des revendications précédentes, dans lequel le nombre de passages intérieurs de ventilation (4a) est dans la plage de 5 à 12.
